# FASCICULE DE BREVET EUROPEEN

(11) **EP 3 097 001 B1**
(45) Date de publication et mention de la délivrance du brevet: **21.03.2018**
(21) Numéro de dépôt: 15705633.4
(22) Date de dépôt: 15.01.2015
(51) Int. Cl.: B62D 25/08, B60K 5/12, B62D 21/02

(54) **CHASSIS DE VÉHICULE AUTOMOBILE COMPRENANT DEUX LONGERONS RENFORCES**
KRAFTFAHRZEUGGESTELL MIT ZWEI VERSTÄRKTEN SEITENELEMENTEN
MOTOR VEHICLE CHASSIS COMPRISING TWO REINFORCED SIDE MEMBERS

(30) Priorité: 24.01.2014 FR 1450617
(43) Date de publication de la demande: 30.11.2016
(73) Titulaire: Renault s.a.s, 92100 Boulogne-Billancourt (FR)
(72) Inventeur: HLUBINA, Thierry, F-92370 Chaville (FR); RIOULT, Olivier, F-78960 Voisins Le Bretonneux (FR)
(86) Numéro de dépôt international: PCT/FR2015/050095
(87) Numéro de publication internationale: WO 2015/110742

(56) Documents cités:
- EP-A2- 1 690 722
- JP-A- H0 443 172
- US-B1- 6 390 437

## Description

L'invention concerne un châssis de véhicule automobile comprenant une pièce de renfort pour la fixation du groupe motopropulseur d'un véhicule automobile à traction électrique ou thermique, et un véhicule comprenant un tel châssis.

Le document EP 1 690 722 A2 divulgue un châssis de véhicule automobile selon le préambule de la revendication 1. Un véhicule automobile comprend généralement un châssis assemblé de manière à définir l'habitacle du véhicule, et un compartiment moteur distinct de l'habitacle. Le compartiment moteur peut être situé à l'avant ou à l'arrière du véhicule et est destiné à recevoir le groupe motopropulseur du véhicule automobile.

Qu'il soit électrique ou thermique, le groupe motopropulseur est généralement suspendu entre deux longerons du châssis du véhicule automobile par l'intermédiaire de supports de groupe motopropulseur.

Outre leur fonction de maintien en position fixe du groupe motopropulseur, les supports du groupe motopropulseur doivent être réalisés de manière à permettre un amortissement des vibrations de ce groupe motopropulseur de sorte qu'elles ne se propagent pas au travers du châssis.

La batterie d'un véhicule automobile à traction électrique est généralement montée sous une partie avant du plancher du véhicule automobile. Elle n'est donc pas positionnée entre les mêmes traverses que le réservoir à carburant du véhicule à traction thermique correspondant, le réservoir à carburant étant généralement sous une partie arrière du plancher du véhicule automobile. Par conséquent, dans la version électrique du véhicule automobile, un espace vacant est laissé par l'absence de réservoir. Malgré cet espace, l'absorption de l'énergie transmise lors de différents chocs doit se faire sans engendrer de déformation afin de respecter les critères d'intégrité de la structure de l'habitacle, du réservoir de carburant, tout en conservant les fonctionnalités de la fixation du train arrière du véhicule ainsi que la possibilité d'ouverture des portes arrière.

Généralement, les supports du groupe motopropulseur, qu'on nomme aussi interfaces moteur, sont réalisés par l'aménagement d'une rehausse entre les longerons et le moteur. Cette rehausse est réalisée à partir d'un assemblage multi-pièces en porte-à-faux au-dessus du longeron. Cet assemblage en porte-à-faux a pour effet de dégrader la raideur d'accueil à l'interface. La rehausse est donc renforcée en conséquence.

Etant donné la configuration nécessaire pour recevoir le groupe moteur sur une rehausse, chaque rehausse doit être conformée différemment selon qu'elle est destinée à être fixée sur le longeron gauche ou sur le longeron droit du châssis.

Chaque support reçoit alors le groupe motopropulseur à fixer via une pièce de support qui comprend également des spécificités géométriques dépendant du type de groupe motopropulseur et du côté du châssis sur lequel il est installé.

L'invention a pour but de pallier les inconvénients mentionnés ci-dessus en fournissant un châssis comprenant deux supports communs, c'est-à-dire pouvant être utilisés quel que soit le groupe motopropulseur, et identiques, c'est-à-dire pouvant chacun être utilisés aussi bien sur le longeron droit que le longeron gauche.

Selon un aspect de l'invention, il est proposé un châssis de véhicule automobile comprenant deux longerons au moins partiellement creux et de section approximativement rectangulaire, et deux pièces de renfort identiques aptes à coopérer chacune avec un longeron pour soutenir un groupe motopropulseur dans un compartiment moteur du véhicule automobile, chaque pièce de renfort comprenant une tôle emboutie de forme sensiblement parallélépipédique ouverte sur une face et étant disposée entièrement à l'intérieur d'un des longerons, chaque pièce de renfort comprenant en outre deux orifices dans une première face et deux orifices dans une seconde face distincte et orthogonale à la première face, les quatre orifices étant taraudés de manière à définir quatre écrous identiques.

L'intégration de la pièce de renfort à l'intérieur du longeron permet de renforcer l'intérieur même du longeron pour prendre en compte les efforts du groupe motopropulseur vers le soubassement du châssis du véhicule. La pièce de renfort et l'intérieur creux du longeron dans lequel la pièce de renfort est logée permettent de faire participer sous effort l'ensemble du corps du longeron.

L'intégration permet également de fournir une pièce de renfort pouvant être utilisée sur chacun des deux longerons sans adaptation. Elle permet également d'utiliser la pièce de renfort quel que soit le type de groupe motopropulseur, électrique ou thermique, utilisé par le véhicule automobile muni de ce châssis.

Avantageusement, chaque pièce de renfort est réalisée en une seule pièce de manière à réduire les étapes d'assemblage et ainsi à augmenter la solidité de la pièce.

La réduction du nombre de pièces pour réaliser une pièce de renfort permet également de réduire le nombre de référence dans la documentation technique et le nombre de pièces à manipuler, ce qui entraîne une simplification de réalisation du châssis.

De préférence, la tôle emboutie de chaque pièce de renfort comprend des pattes repliées sur elles-mêmes et soudées par points de soudure.

La réalisation de quatre écrous identiques dans la pièce de renfort pour la fixation de la pièce de support destinée à recevoir le groupe motopropulseur permet de standardiser les opérations de vissage au montage du groupe motopropulseur.

Chaque pièce de renfort comprend avantageusement des gorges aménagées sur au moins une de ses faces externes et aptes à définir des nervures sur les faces internes correspondantes pour rigidifier la pièce et faciliter le traitement anticorrosion.

Les nervures réalisées dans la pièce de renfort peuvent être réalisées lors de l'emboutissage de la tôle à partir de laquelle la pièce de renfort est faite. Les nervures sont aménagées à la fois pour rigidifier la pièce de renfort et pour faciliter le traitement anticorrosion de la pièce de renfort.

Chaque pièce de renfort est fixée par points de soudure à l'intérieur du longeron pour solidariser la pièce de renfort avec le longeron.

Le châssis comprend deux pièces de support du groupe motopropulseur aptes à fixer le groupe motopropulseur à chacun des longerons à l'aide des pièces de renfort.

Les pièces de support sont spécifiques au type de groupe motopropulseur utilisé, de manière à ajuster parfaitement l'assise de réception du groupe motopropulseur sur le longeron.

Selon un autre aspect de l'invention, il est proposé un véhicule automobile comprenant un groupe motopropulseur et un châssis tel que défini ci-dessus.

D'autres avantages et caractéristiques de l'invention apparaîtront à l'examen de la description détaillée d'un mode de réalisation de l'invention, nullement limitatif, et des dessins annexés, sur lesquels :
- la figure 1 représente, de manière schématique, une pièce de renfort de longeron d'un châssis selon un mode de réalisation ;
- la figure 2 illustre une vue arrachée d'un longeron du châssis muni de la pièce de renfort de la figure 1 ;
- la figure 3 illustre une vue arrachée d'un longeron du châssis muni de la pièce de renfort de la figure 1 et d'une pièce de support du groupe motopropulseur.

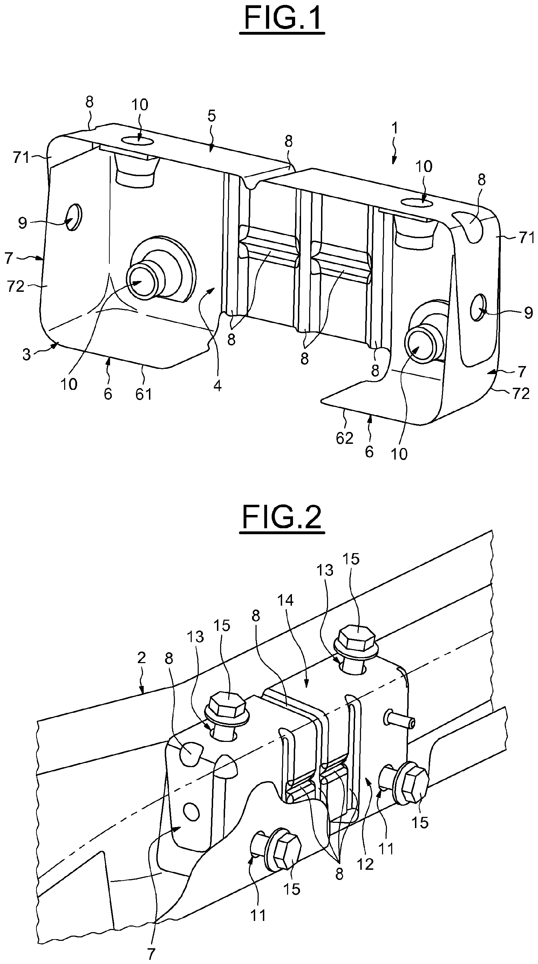

Sur la figure 1, est représentée, de manière schématique, une pièce de renfort 1 de longeron 2 d'un châssis d'un véhicule automobile selon un mode de réalisation.

La pièce de renfort 1 forme un boîtier parallélépipédique rectangle ouvert sur une face 3. La pièce de renfort 1 est réalisée à partir d'une plaque de tôle. La plaque de tôle est emboutie pour former un caisson ouvert sur la face 3. Une fois emboutie, la pièce de renfort 1 possède une face principale 4 en regard de la face ouverte 3. La pièce de renfort 1 possède en outre une face supérieure 5 en regard d'une face inférieure 6 formée de deux portions 61 et 62 distantes l'une de l'autre, la face supérieure 5 et la face inférieure 6 s'étendant entre la face principale 4 et la face ouverte 3. La pièce de renfort 1 comprend également deux faces latérales 7 s'étendant, d'une part, entre la face principale 4 et la face ouverte 3, et, d'autre part, entre la face supérieure 5 et la face inférieure 6.

Chaque face latérale 7 comprend deux portions de face latérale 71 et 72 rabattues l'une sur l'autre pour former une face latérale 7 continue. La première portion 71 de chaque face latérale 7 est solidaire de la face supérieure 5 de la pièce de renfort 1. La seconde portion 72 de chaque face latérale 7 est solidaire de la face inférieure 6 de la pièce de renfort 1. La seconde portion 72 d'une face latérale 7 est solidaire d'une portion 61 de la face inférieure 6 et la seconde portion 72 de l'autre face latérale 7 est solidaire de l'autre portion 62 de la face inférieure 6. La réalisation de la face inférieure 6 en deux parties 61 et 62 distantes permet de limiter les surfaces en contact avec le longeron.

Chacune des deux portions 71 et 72 des faces latérales 7 est emboutie de manière à permettre un pliage de la plaque entre la face supérieure 5 et la première portion 71 de chaque face latérale 7 d'une part, et un pliage de la plaque entre la seconde portion 72 de chaque face latérale 7, la face principale 4 et la face inférieure 6 d'autre part.

La première portion 71 de chaque face latérale 7 est pliée de manière à se rabattre sur la seconde portion 72 de la face latérale 7 correspondante. Les deux portions 71 et 72 de chaque face latérale 7 sont solidarisées à l'aide, par exemple, d'un point de soudure.

La face principale 4 comprend des sillons réalisés sur sa partie externe de manière à former sur la partie interne de la face principale 4, c'est-à-dire sur la partie en regard de la face ouverte 3, des nervures 8. Les nervures 8 permettent, d'une part, de renforcer la structure de la pièce de renfort 1, et, d'autre part, de faciliter le passage de la cataphorèse lors du traitement anticorrosion de la pièce de renfort 1.

Les nervures 8 aménagées dans la pièce de renfort 1 sont réalisées lors de l'emboutissage de la tôle à partir de laquelle la pièce de renfort 1 est faite. Les nervures 8 disposées verticalement, c'est-à-dire s'étendant entre la face supérieure 5 et la face inférieure 6, débouchent toutes sur l'intervalle entre les deux portions de face inférieure 61 et 62. Ces nervures contribuent à la raideur de la pièce de renfort 1 et permettent en outre de réduire la surface de contact avec le longeron.

La face supérieure 5 comprend également sur sa partie interne une nervure 8 aménagée de manière à communiquer avec une nervure de la face principale 4.

Deux nervures 8 sont également réalisées de manière à s'étendre respectivement entre la face supérieure 5 et la première portion 71 de chacune des deux faces latérales 7.

Chaque face latérale 7 comprend un orifice 9 permettant un écoulement d'air dans le longeron 2.

La face principale 4 comprend en outre deux orifices 10 taraudés identiques. Les deux orifices sont réalisés de part et d'autre de l'ensemble de nervures 8 verticales de la face principale 4. Les orifices 10 sont réalisés de manière à former deux écrous identiques.

La face supérieure 5 comprend également deux orifices 10 taraudés identiques. Les deux orifices 10 sont identiques aux orifices 10 de la face principale 4 de manière à former deux écrous identiques entre eux et identiques aux deux écrous de la face principale 4.

La figure 2 illustre une vue éclatée d'un longeron 2 du châssis muni de la pièce de renfort 1 de la figure 1.

La pièce de renfort 1 est insérée dans une partie creuse du longeron 2. Le longeron 2 possède une forme générale parallélépipédique rectangle. Le longeron 2 comprend quatre orifices aptes à recevoir des vis 15. Deux orifices 11 sont réalisés dans une première face 12 du longeron 2 de manière à être en regard des orifices 10 de la face principale 4 de la pièce de renfort 1. Deux autres orifices 13 sont réalisés dans une seconde face 14 du longeron 2 de manière à être en regard des orifices 10 de la face supérieure 5 de la pièce de renfort 1 lorsque la pièce de renfort 1 est logée dans le longeron 2.

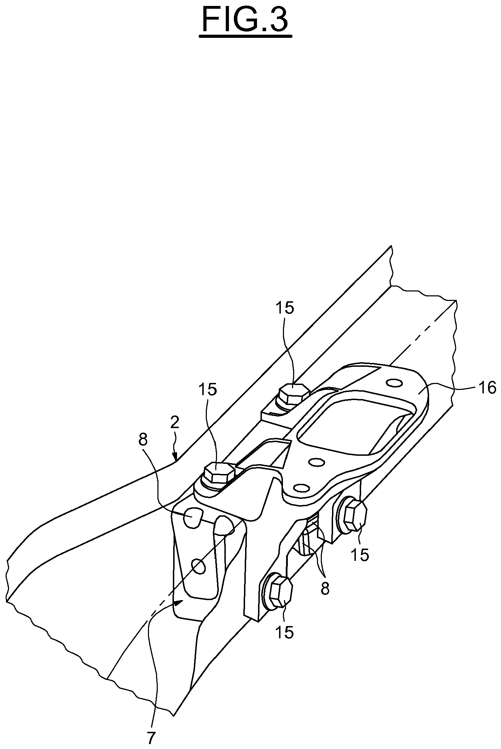

Comme cela est illustré sur la figure 3 qui représente une vue éclatée d'un longeron 2 du châssis d'un véhicule automobile muni de la pièce de renfort 1 de la figure 1, les vis 15 permettent de fixer sur le longeron 2 une pièce de support 16 du groupe motopropulseur.

La conformation de la pièce de support 16 est spécifique selon le type de groupe motopropulseur, c'est-à-dire selon que le véhicule automobile soit propulsé ou tracté à partir d'un moteur thermique ou bien d'un moteur électrique. La pièce de support 16 permet de maintenir en suspension le groupe motopropulseur entre deux longerons disposés de chaque côté du châssis du véhicule automobile et définissant, à l'endroit du groupe motopropulseur, un compartiment moteur.

La pièce de renfort 1 permet ainsi de renforcer le longeron à l'endroit où la pièce de support 16 est fixée. De plus, la réalisation de la pièce de renfort 1 lui confère une utilisation quel que soit le type de groupe motopropulseur utilisé. En outre, la pièce de renfort utilisée dans le longeron gauche et celle utilisée dans le longeron droit sont les mêmes, ce qui permet de n'avoir à modifier que la pièce de support 16 en fonction du type de groupe motopropulseur et du côté du châssis sur lequel la pièce de support est fixée.

L'invention fournit ainsi un châssis comprenant deux supports commun, c'est-à-dire pouvant être utilisés quel que soit le groupe motopropulseur, et identiques, c'est-à-dire pouvant chacun être utilisé aussi bien sur le longeron droit que sur le longeron gauche.

## Revendications

1. Châssis de véhicule automobile comprenant deux longerons (2) au moins partiellement creux et de section approximativement rectangulaire, et deux pièces de renfort (1) identiques aptes à coopérer chacune avec un longeron (2) pour soutenir un groupe motopropulseur dans un compartiment moteur du véhicule automobile, **caractérisé en ce que** chaque pièce de renfort (1) comprend une tôle emboutie de forme sensiblement parallélépipédique ouverte sur une face (3), chaque pièce de renfort (1) étant disposée entièrement à l'intérieur d'un des longerons (2), chaque pièce de renfort (1) comprenant deux orifices (10) dans une première face (4) et deux orifices (10) dans une seconde face (5) distincte et orthogonale à la première face (4), les quatre orifices (10) étant taraudés de manière à définir quatre écrous identiques.

2. Châssis selon la revendication 1, dans lequel chaque pièce de renfort (1) est réalisée en une seule pièce.

3. Châssis selon l'une des revendications 1 ou 2, dans lequel la tôle emboutie de chaque pièce de renfort (1) comprend des pattes repliées (71 et 72) sur elles-mêmes et soudées par points de soudure.

4. Châssis selon l'une des revendications 1 à 3, dans lequel chaque pièce de renfort (1) comprend des gorges aménagées sur au moins une de ses faces externes et aptes à définir des nervures (8) sur les faces internes correspondantes.

5. Châssis selon l'une des revendications 1 à 4, dans lequel chaque pièce de renfort (1) est fixée par points de soudure à l'intérieur du longeron (2).

6. Châssis selon l'une des revendications 1 à 5, comprenant deux pièces de support (16) du groupe motopropulseur aptes à fixer le groupe motopropulseur à chacun des longerons (2) à l'aide des pièces de renfort (1).

7. Véhicule automobile comprenant un groupe motopropulseur, **caractérisé en ce qu'**il comprend un châssis selon l'une des revendications 1 à 6.

## Patentansprüche

1. Kraftfahrzeug-Fahrgestell, das zwei Längsträger (2), die zumindest teilweise hohl sind und einen in etwa rechtwinkligen Querschnitt haben, und zwei gleiche Verstärkungsbauteile (1) enthält, die je mit einem Längsträger (2) zusammenwirken können, um eine Antriebseinheit in einem Motorraum des Kraftfahrzeugs zu stützen, **dadurch gekennzeichnet, dass** jedes Verstärkungsbauteil (1) ein tiefgezogenes Blech von im Wesentlichen parallelepipedischer Form enthält, das an einer Seite (3) offen ist, wobei jedes Verstärkungsbauteil (1) vollständig im Inneren eines der Längsträger (2) angeordnet ist, wobei jedes Verstärkungsbauteil (1) zwei Öffnungen (10) in einer ersten Seite (4) und zwei Öffnungen (10) in einer unterschiedlichen und zur ersten Seite (4) orthogonalen zweiten Seite (5) enthält, wobei die vier Öffnungen (10) ein Innengewinde haben, um vier gleiche Muttern zu definieren.

2. Fahrgestell nach Anspruch 1, wobei jedes Verstärkungsbauteil (1) aus einem Stück hergestellt ist.

3. Fahrgestell nach einem der Ansprüche 1 oder 2, wobei das tiefgezogene Blech jedes Verstärkungsbauteils (1) auf sich selbst umgebogene und durch Schweißpunkte verschweißte Laschen (71 und 72) enthält.

4. Fahrgestell nach einem der Ansprüche 1 bis 3, wobei jedes Verstärkungsbauteil (1) auf mindestens einer seiner Außenseiten angeordnete Rillen enthält, die auf den entsprechenden Innenseiten Rippen (8) definieren können.

5. Fahrgestell nach einem der Ansprüche 1 bis 4, wobei jedes Verstärkungsbauteil (1) durch Schweißpunkte im Inneren des Längsträgers (2) befestigt ist.

6. Fahrgestell nach einem der Ansprüche 1 bis 5, das zwei Trägerbauteile (16) der Antriebseinheit enthält, die die Antriebseinheit an jedem der Längsträger (2) mit Hilfe der Verstärkungsbauteile (1) befestigen können.

7. Kraftfahrzeug, das eine Antriebseinheit enthält, **dadurch gekennzeichnet, dass** es ein Fahrgestell nach einem der Ansprüche 1 bis 6 enthält.

## Claims

1. Motor vehicle chassis comprising two side members (2) that are at least partially hollow and have an approximately rectangular cross-section, and two identical reinforcement parts (1) each capable of engaging with a side member (2) to support a power train in an engine compartment of the motor vehicle, **characterized in that** each reinforcement part (1) comprises a substantially parallelepipedic stamped metal sheet open on one face (3), each reinforcement part (1) being disposed entirely inside one of the side members (2), each reinforcement part (1) comprising two orifices (10) in a first face (4) and two orifices (10) in a second face (5), which is separate from and orthogonal to the first face (4), the four orifices (10) being tapped so as to define four identical nuts.

2. Chassis according to Claim 1, in which each reinforcement part (1) is made in one piece.

3. Chassis according to either of Claims 1 or 2, in which the stamped metal sheet of each reinforcement part (1) comprises tabs (71 and 72) folded one on top of the other and welded by welding points.

4. Chassis according to any one of Claims 1 to 3, in which each reinforcement part (1) comprises grooves formed on at least one of its outer faces and able to define ribs (8) on the corresponding inner faces.

5. Chassis according to any one of Claims 1 to 4, in which each reinforcement part (1) is fixed by welding points to the inside of the side member (2).

6. Chassis according to any one of Claims 1 to 5, comprising two support parts (16) for the power train able to fix the power train to each of the side members (2) with the aid of the reinforcement parts (1).

7. Motor vehicle comprising a power train, **characterized in that** it comprises a chassis according to any one of Claims 1 to 6.
